# EUROPEAN PATENT SPECIFICATION

(11) **EP 2 821 264 B1**
(45) Date of publication and mention of the grant of the patent: **30.05.2018**
(21) Application number: 13174663.8
(22) Date of filing: 02.07.2013
(51) Int. Cl.: B60G 9/00

(54) **Device for limiting the hanging of a rebounded axle of a vehicle and vehicle comprising such device**
Vorrichtung zur Begrenzung des Hängens einer aufgeprallten Achse eines Fahrzeugs und Fahrzeug mit solcher Vorrichtung
Dispositif de limitation en détente de la suspension d'un essieu d'un véhicule et véhicule comportant un tel dispositif

(43) Date of publication of application: 07.01.2015
(73) Proprietor: IVECO MAGIRUS AG, 89079 Ulm (DE)
(72) Inventor: Konrad, Christian, 89269 VÖHRINGEN (DE); Güngül, Timur, 82256 FÜRSTENFELDBRUCK (DE); Schädle, Markus, 88299 LEUTKIRCH (DE); Wörner, Gerhard, 89079 ULM (DE)
(74) Representative: Franzolin, Luigi

(56) References cited:
- WO-A1-01/70525
- DE-U1- 29 822 564
- US-A- 5 577 759
- US-A1- 2007 108 711
- US-B1- 6 279 950

## Description

### Field of the invention

The present invention concerns a device for limiting the hanging of a rebounded axle of a vehicle. The present invention is also relative to a vehicle comprising a plurality of device according to said invention.

### Description of the prior art

As known, some vehicles are designed for example for off-road applications. These vehicles, such as for example those used for the military defense, are subjected to high stresses due to the impervious paths along which they run. On this regard the axles of the vehicles, for example the rear axles, are subjected to frequent rebounds. The expression "rebounds" wants to indicated substantially a relative movement of an axle with respect to the chassis of the vehicle.

It is clear that the for these vehicles the design of the suspension groups is a factor particularly critical especially if the suspensions groups comprise shock absorbers. Indeed, in this case the shock absorbers define an lower limit for the rebounds of the axle. Such lower limit is established substantially by the maximum extension of the absorbers. However when this condition is reached, the absorbers are seriously stressed.

In order to avoid their damaging, in some cases the absorbers are oversized or they are chosen so as to support forces higher than the rated load. In these cases they are designed so as to comprise internal elements which improve their mechanical strength. However, these technical solutions are not satisfactory especially in terms of costs and space. DE-U1-29822564 discloses a single belt attached between an axle and the chassis of the vehicle. Such configuration may. be improvd in case rebound loads are relatively high. It is an object of the present invention to solve such a problem.

Within this object, a first purpose of the present invention is to provide a stopping device which can be easily installed on a vehicle.

Another purpose of the present invention is to provide a stopping device having a predictable and repeatable behaviour also during return phase of the hanging, i.e. when the axle moves approaching the chassis after a rebound. Not the last purpose of the present invention is to provide a stopping device which is reliable and easy to manufacture at competitive costs.

### Summary of the invention

The present invention relates to a stopping device for limiting the hanging of a rebounded axle on a vehicle, wherein said vehicle comprises also a chassis provided with a couple of side members. The stopping device according to the invention is characterized in that it comprises at least a first stop element including a flexible belt, a first linking element and a second linking element; each of said linking elements being connected to a corresponding end of the belt.

The device according to the invention also comprises first connecting means configured for connecting stably said first linking element to one of said member of said vehicle and second connecting means configured for connecting stably said second first linking element to said rebounded axle of said vehicle.

According to the invention, the presence of one or more stop elements advantageously fix an lower limit for the hanging of the rebounded axle. Such limit depends on the length of the stop elements evaluated as the distance between the fixing point of the linking elements. In the presence of a shock absorber, the length of the stop elements is chosen so that the hanging of the axle is stopped before the end stop of the shock absorber. This allow to protect the absorber and to improve its durability.

The dependent claims disclose preferred embodiments of the present invention, forming integral part of the present description.

### Brief description of the drawings

The invention will become fully clear from the following detailed description, given by way of a mere exemplifying and non-limiting example, to be read with reference to the attached drawing figures, wherein:
- Figure 1 is a scheme of a stopping device according to known prior art;
- Figures 2 and 3 are two schemes relative to preferred embodiment of a stopping device according to the invention;
- Figure 4 is a view of a possible installation on an off-road vehicle of a device according to the present invention;
- Figure 5 is a first detailed view of the device according to the invention shown in Figure 4 ;
- Figure 6 is view of the installation of Figure 4 wherein some part of the vehicles have been deleted for a better showing of the device according to the invention;
- Figures 7 and 8 are detailed views of the installation shown in Figure 4 ;
- Figure 9 and 10 show detail a stop elements of the device according to the invention shown in the Figures 4-8 .

The same reference numerals and letters in the figures designate the same or functionally equivalent parts.

### Detailed description of the preferred embodiments

With reference to the figures above indicated, the stopping device 1 according to the invention can be easily installed on new vehicles, especially for off-road applications as in the case of military defense vehicles. However the device 1 could be also installed during the upgrading operations of an used vehicle. In any case the stopping device 1 is suitable to fix a lower limit for the hanging of a rebounded axle of the vehicle. For the purpose of the present invention the term "hanging" wants to indicate the distance which is generated substantially between the chassis and a rebounded axle of the vehicle.

Clearly in order to assure a correct balance, each rebounded axle requires the installation of at least two stopping device 1 each of which for limiting the hanging between the chassis and a corresponding terminal part of the axles. The following description always refers to a single stopping device 1 for clarity reasons.

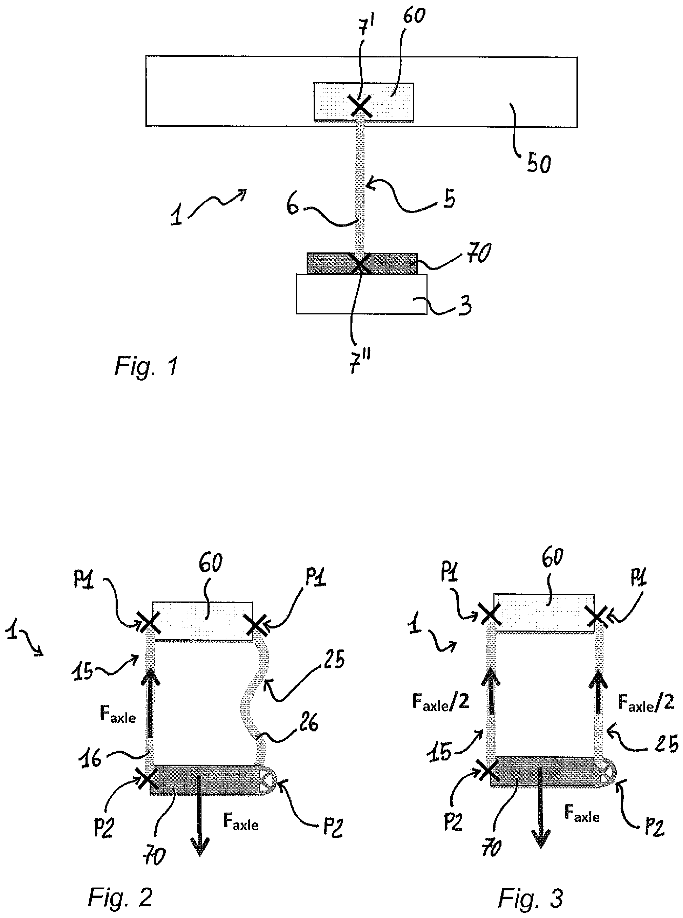

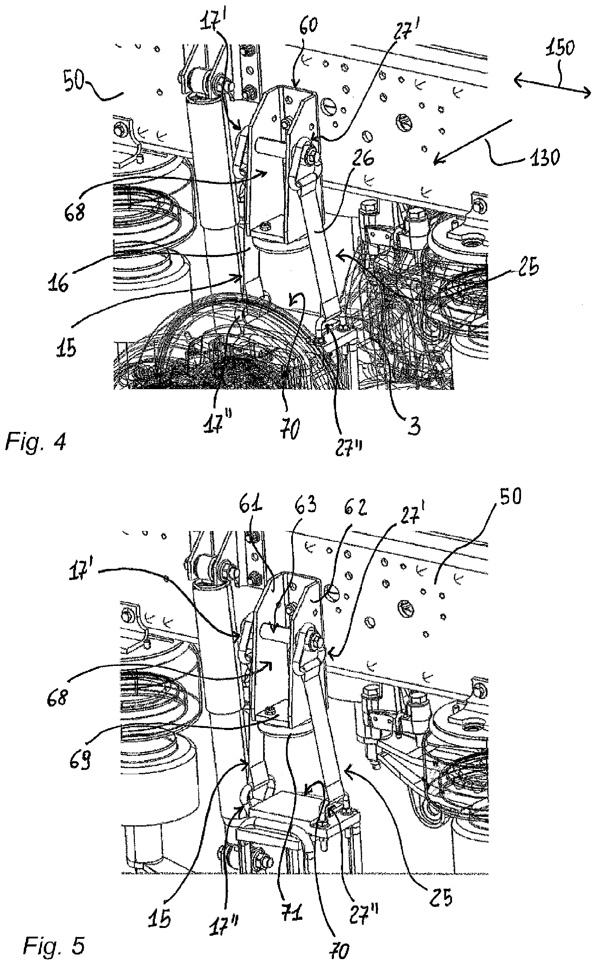

With reference to the scheme of Figure 1, the stopping device 1 according to the invention comprises at least a stop element 5 which includes a flexible belt 6 and a couple of linking element 7', 7" each of which connected to a corresponding end of the belt 6. For the purposes of the present invention, the term "belt" wants to indicate a flexible strap made of a synthetic material of the kind normally used in industrial application, for example for lifting products or to fix products on trucks. The flexible strap made of a synthetic material could be replaced also by another flexible component. The size of the belt 6, in term of resistant cross section, is chosen as a function of the forces involved, while its length depends mainly on the maximum hanging tolerated for the axle. In the presence of absorbers, such tolerated hanging is preferably chosen so that the hanging stops before the end-stop of the absorbers. The stopping device 1 further comprises first connecting means configured for fixing stably a first linking element 7' of the stop element 5 to the side member 50 of the vehicle and second connecting means configured for fixing stably a second linking element 7" of the stop element 5 to the rebounded axle 3. According to a preferred embodiment of the invention, the first connecting means comprises at least a first bracket 60 suitable to be stably connected to the side member 50 of the vehicle. The first linking element 7' is stably fixed to said first bracket 60, consequently the same first element 7' is stably fixed to the side member 50. Analogously the second connecting means preferably comprise a second bracket 70 suitable to be connected directly or indirectly on the rebounded axle 3. The term "indirectly" wants to indicate a condition for which between the second bracket 70 and the axle is interposed another element, as shown in the embodiments below described with reference to the figures 4-8. The second linking element 7" is stably fixed to the second bracket 70 so that the same second element 7' results connected stably to the axle 3.

It has been seen that the use of a stop element 5 comprising a belt 6 made of synthetic material is particularly advantageous since such belt 6 crinkles in the same way and substantially according to a defined direction. In other words the behaviour of the belt is always predictable and/or repeatable. Further, in virtue of the use of the synthetic material, also the damaging of the belt 6 is advantageously avoided. At the same the noise during the use of the stop element 5 is advantageously very low.

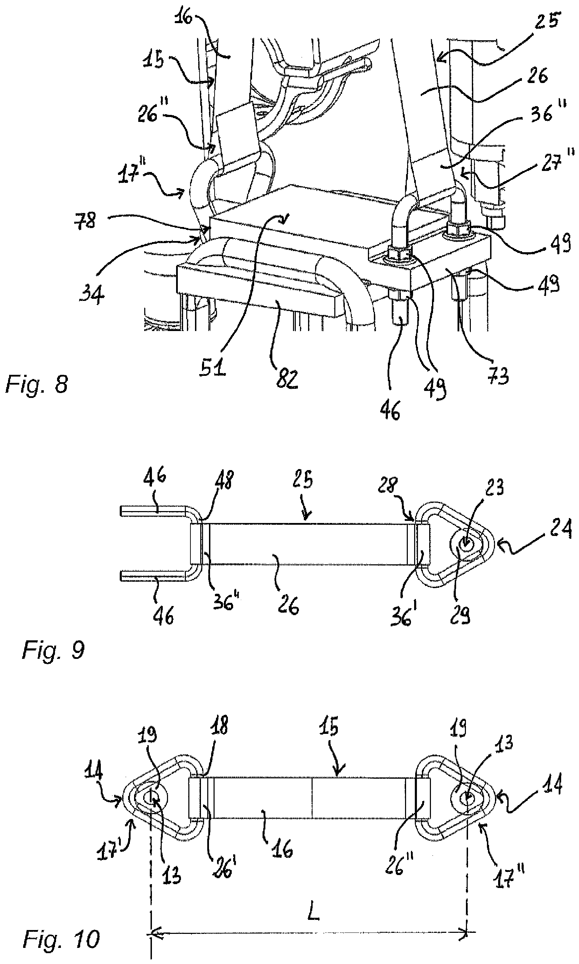

Figures 2 and 3 are schematizations concerning a preferred embodiment of the invention according to which the stopping device 1 advantageously comprises a first stop element 15 and a second stop element 25. The first stop element 15 comprises a first belt 16 and two linking elements 17', 17" each of which connected to a corresponding end of the first belt 16. Similarly the second stop element 25 comprises a second belt 26 and two linking elements 27', 27" each of which connected to a corresponding end of the second belt 26. In the following, a possible and advantageously embodiment of the linking elements 17', 17'', 27', 27" of the belts 16,26 is described in greater detail with reference to the figures 9 and 10.

The use of two stop elements 15, 25 improves the mechanical strength of the device and makes the same able to support higher loads. On this purpose, in order to further improve the operation of the device, according to a preferred embodiment, at least one of the stop element 15,25 is connected to one of said bracket 60,70 in an adjustable manner so as to regulate the length of the stop element itself. On this purpose, the term "length" means the distance between the fixing points P1,P2 of the linking elements of the stop elements 15,25 to the corresponding brackets 60,70. According to this embodiment of the invention, by adjusting the length of the stop element 15,25 it is possible to split equally the load on the two belts.

On this regard, in the schemes of Figures 2 and 3, the reference P1 indicates the connection points of the stop elements 15,25 to the first (upper) bracket 60, while P2 indicates the connection points of the stop elements 15,25 to the lower bracket (second bracket 70).

It has been seen, that because of the assembly and production tolerances the two step elements 15,25 could have different lengths. Consequently there could be the risk that the axle load Fₐₓₗₑ is intercepted by a sole belt as in the scheme of Figure 2. However, by providing means for adjusting the length of at least one stop element (the second stop element 25 in Figure 3), it is possible to assure an equal repartition of the load Fₐₓₗₑ between the two stop elements 15,25 as shown in Figure 3. In other words, by means of the length modification performed on at least one of the two stop elements 15,25, the elements 15,25 can surely support the same load corresponding to Fₐₓₗₑ/2.

In the schemes of Figures 2 and 3, the fixing points P1-P2 of the stop elements 15,25 are indicated with a cross symbol, while the points where the length can be adjusted it is indicated with a circled cross symbol. As shown, the length of the second stop element 25 is preferably adjusted at the lower bracket 70. However alternatively it could be adjusted at the first bracket 60. Further, according to an alternative solution, it is also possible to fix both the stop elements 15,25 to at least one of the brackets 60,70, in an adjustable manner.

Figures 4-10 are relative to the installation of a possible embodiment of a stopping device 1 according to the invention on an off-road vehicle for limiting the hanging of a rear rebounded axle 3 of the same vehicle. The profile of the structure of the rear rebounded axle 3 is shown in Figure 4 with thin lines. Such rear axle 3 is missing in the other figures for a better showing of the parts of the stopping device 1.

With reference to Figure 4, the stopping device is preferably installed on a vehicle comprising a chassis having a couple of side member 50 according to a typical solution in the field of military vehicles for the transportation of supplies or passengers. As shown in the figures, for each of the axle, especially for the rear axles, the vehicle also comprises a couple of suspension assemblies each of which including load absorber components, for example, air bellows 90 and or shock absorbers 95.

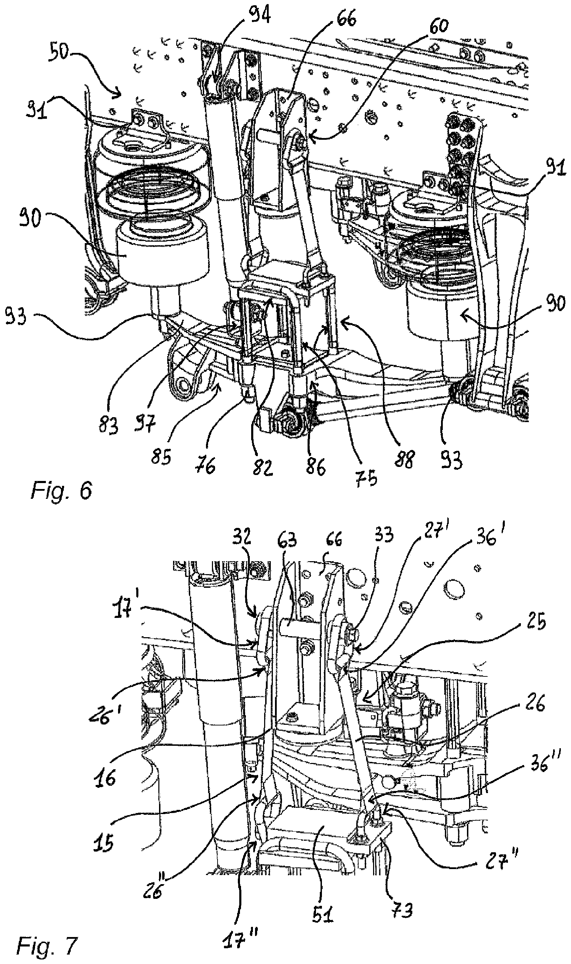

Figure 6 shows in detail a possible embodiment of a suspension assembly wherein the air bellows 90 and the shock absorber 95 are mounted on a suspension supporting arm 85 which is connected to the axle 3 by means of a connection assembly 88. More in detail, the arm 85 is arranged below the axle 3 and develops according to the development direction 150 of the side member 50.

The air absorbers 90 comprises an upper end 91 connected to a side member 50 and a lower end 93 installed on a terminal part 83 of the suspension supporting arm 85. Similarly also the shock absorber 95 is connected at its upper end 94 to the side member 50 and at its lower end 97 to the arm 88 in a position between a central portion 86 of the arm 85 and one of its terminal part 83.

For what concerns the connection assembly 88, it comprises an upper plate 82, configured to be arranged over the axle 3 (see Figure 4), and a couple of U-shaped brackets 75 which are bolted to a central portion 86 of the suspension supporting arm 85. As shown in Figure 6, the two brackets 75 are arranged over the upper plate 82 so that its threaded ends protrudes downwards for crossing corresponding holes defined through said central portion 86. For each end of the u-shaped brackets 75, a corresponding closing nut 76 is provided to fix the central portion 86 against the lower part of the axle 3.

As shown in the figures 4-8, according to a preferred embodiment, the device according to the invention comprises a first stop element 15 and a second stop element 25 wherein the length of the second stop element 25 is adjustable according to the purposes above indicated. More in detail the linking element 27" of the second stop element 25 is connected to the second bracket 70 by means of adjusting means which allows such modification of the length of the same stop element 25.

With reference to Figure 5, the first bracket 60 includes a first supporting wall 61 and a second supporting wall 62 which are substantially parallel each other and mutually separated by a partition space 68. The first bracket 60 is configured to be fixed to the said member 50 so that the supporting walls 61,62 extend outwards according to a direction 130 substantially orthogonal to the development direction 150 of the side member 50.

Said first bracket 60 also comprises first fixing means to fix a first linking element 17' of the first stop element 15 in a position adjacent to said first supporting wall 61, preferably outside said partition space 68, and to fix a first linking element 27' of the second stop element 25 to a position adjacent to said second supporting wall 62, also in this case preferably outside said partition space 68.

As shown always in Figures 4 and 5, the first bracket 60 preferably comprises also a flat connecting wall 66 from which the supporting walls 61,62 protrudes orthogonally according to an U-shaped configuration. Such connecting wall 66 is preferably connected to a surface of the side member 50 which is faced outwards of the vehicle. As illustrated, the connection is preferably performed by means of bolts. Alternatively the connecting wall 66 could be welded to the side member 50 of the vehicle.

As shown in the figures, the first bracket 1 preferably comprises one or more reinforcing elements 69,63 arranged inside the partition space 68 defined between the supporting walls 61, 62. On this regard, the first bracket 60 preferably comprises a bottom wall 69 arranged between the supporting walls 61,62 substantially at their lower edges. The bottom wall 69 increases the stiffness of the bracket 60 in correspondence of the lower edge of the supporting walls.

The first bracket 60 preferably comprises also a cylindrical bush 63 arranged between the supporting walls 61,62 above the bottom wall 69 in a position more close to the upper edges of the same walls 61,62. More in detail the bush 63 is arranged so that its longitudinal axis is substantially orthogonal to said supporting walls 61,62. As below indicated, the bush 63 preferably has a through hole for the arrangement of fixing means 32,33 for fixing corresponding linking elements 17', 27' of the stop elements 15, 25 to the supporting walls 61,62.

With reference to Figure 5, according to a preferred embodiment the stopping device 1 also comprises a buffer element 71 which is arranged below the bottom 69 outside the partition space 68. The buffer element 71 avoids the impact of the first bracket 60 against the second bracket 70 when the axle 3 moves in approaching the side member 50.

With reference to Figure 8, the second bracket 70 comprises a connecting plate 51 which is mechanically connected to the rebounded axle 3 of the vehicle in a position substantially below the first bracket 60 connected to the side member 50. According to a preferred embodiment shown in the figures, the connecting plate 51 is defined in a single body with the upper plate 82 of the connecting assembly. This solution is clearly preferable for new vehicles and it is advantageous because a sole body is provided for two functions (function of the connecting plate 51 and of the upper plate 82). In other words, according to this solution as a matter of fact the upper plate 82 of the connecting assembly 88 is exploited also as "connecting plate 51" of the stopping device according to the invention. Therefore according to such preferred embodiment the connecting plate 51 can be regarded as directly connected to the rebounded axle 3.

Alternatively in the case of the upgrading of used vehicles, for example, the two components (51,82) at issue could be carried out independently and subsequently joined. According to such alternative solution (not shown in the Figures) the connecting plate 51 could be fixed, for example by welding, on the upper plate 82 of the connecting assembly 88 above described. Hence in this case the connecting plate 51 would be indirectly connected to the axle 3.

According to another possible embodiment, not shown in the Figures, said connecting plate 51 could be fixed directly to the rebounded axle 3 independently from the connecting assembly 88, i.e. in a position different to that of the upper plate 82.

With reference again to Figure 8, the device comprises second fixing means to fix the second linking elements 17",27" of the two stop elements 15,25 at opposite portions 73,78 of said connecting plate 51. More in detail, such portions 78,73 are "opposite" along a direction substantially parallel to the longitudinal development direction 150 of the side member of the vehicle, i.e. along a direction transversal to the axle 3.

As above indicated according to a preferred embodiment the connecting plate 51 is defined in a single body with the upper plate 82. However, as shown in Figure 8, the connecting plate 51 can be identified in the "upper part" of said single body, while the upper plate 82 of the connecting assembly 88 can be identified in the "lower part" of said single body.

Always with reference to Figure 8, an end portion 73 of the connecting plate 51 (i.e. of the upper part of said single body) protrudes with respect to the upper plate 82 (i.e. with respect to the lower part of said single body) of the connecting assembly 88. As below indicated such protruding end portion 73 is used to fix the second linking element 27" of the second stop element 25 in an adjustable manner so as to regulate the length of the same element 25.

Figure 10 shows in detail respectively the embodiment of the first stop element 15 shown in the Figures 4-8. As illustrated stop element 15 comprises a first belt 16, a first linking element 17' and a second linking element 17" each of which comprising a body with three sides according to a triangular shape, preferably a isosceles triangular shape. For each of said linking elements 17', 17", a first side 18 of said body is arranged in a loop 26', 26'' defined by a corresponding end of the first belt 16, as shown in detail also in Figures 7 and 8.

Further for each of said linking elements 17', 17" the body also comprises a cylindrical component 19 which is arranged between the sides defining the triangular shape. Preferably such cylindrical component 19 is arranged at the vertex 14 opposite to the first side 18 of the body arranged in a corresponding loop 26', 26" of the belt 26. For each linking elements 17', 17" such cylindrical component 19 has a through hole 13 suitable to be crossed by a screw element which fixes the linking element 17', 17'' to one of the brackets 60,70 of the stopping device, as below indicated. It has to be noted, that for this embodiment, the "length" of the first element 15 corresponds to the distance L between the axis of the trough holes 13 of the rings 19 of the two linking elements 17, 17".

Moreover it has been noted, that the particular triangular shape of the linking elements 17',17" is only a possible embodiments. Actually the linking elements could have a different structure.

Figure 9 shows in detail respectively the embodiment of the second stop element 25 shown in the Figures 4-8. As illustrated the second stop element 25 comprises a second belt 26, a first linking element 27' and a second linking element 27''. The first linking element 27' is configured to be fixed to the first bracket 60 and has a configuration substantially corresponding to that of the linking elements 17', 17'' of the first stop element 15. Indeed it comprises a body having a triangular shaped form with a first side 28 arranged in a first loop 36' of the second belt 26. Such body also comprises a ring 29, with a through hole 23, arranged at the vertex 24 of the body opposite to the first side 28.

Always with reference to Figure 9, the second linking element 27" is configured for allowing a regulation of the length of the second stop element 25. In particular it comprises a square bend threaded U-bolt comprising a central side 48 is arranged in a loop 36" of the belt defined by a corresponding end of the second belt 26. Said wings 46 are, at least partially, threaded to receive closing nuts 49 as below indicated.

Figures 5 and 7 show in detail a possible embodiment of said first fixing means which fix the first linking element 17' of the first stop element 15 and the second linking element 27" of the second stop element 25 to the first bracket 60. Said first fixing means preferably comprises a first fixing element 32, in form of a screw, and a second fixing element 33, in form of a nut. The first fixing element 32 (screw element 32) crosses the through hole 13 of the cylindrical component 19 of the first linking element 17' of the first element 15 and it crosses internally the bush 63. Moreover the screw element 32 also crosses the through hole 13 of the cylindrical component 29 of the first linking element 27' of the second stop element 25 to be finally engaged with the second fixing element 33 (nut element). A closure action exerted on the screw element 32 and/or on the nut element 33 assures a stable connection of the cylindrical component 19 of the first linking element 17' against the first supporting wall 61 and of the cylindrical component 29 of the first linking element 27' against the second supporting wall 62. On this regard, it has to be note that the bush 63 acts as a stiffness element advantageously provided for fixing the screw element 32 to the nut element 33 with the right tightening-torque. In order to allow the arrangement of said fixing element 32,33, the supporting walls 61,62 are provided with suitable through holes arranged coaxially with the longitudinal axis of the bush 63. These through holes allow the passage of the screw element 32 and therefore its connection with the nut element 33.

Other alternative embodiments of the first fixing means should be regarded as part of the present invention. For example, according to alternative solution not shown in the figures, the first fixing means could comprise two screw elements each of which suitable to be threaded into corresponding threaded ends of the bush.

Figures 8 shows in detail a possible embodiment of said second fixing means which fix the second linking element 17" of the first stop element 15 and the second linking element 27" of the second stop element 25 to the second bracket 70, i.e. to the connecting plate 51. In detail said second fixing means comprises a third screw element 34 which is threaded into a threaded hole (not shown in the figures) defined on the end portion 78 of the connecting plate 51 opposite to the protruding end portion 73 above indicated.

For what concerns the connection of the second linking element 27" of the second stop element 25, such connection is performed by inserting each of the wings 46 of said bend threaded U-bolt though a corresponding hole defined across the protruding end portion 73 of the connecting plate 51. For each of said wings 46, the second fixing means comprises a couple of nuts 49 threaded against opposite sides of the end portion 73. The length of the second stop element 25 can be adjusted by regulating the position of such nuts 49 along the threaded wings 46 of the U-bolt.

With reference again to Figure 8, it has to be noted that the first fixing means and the second fixing means are arranged so that the two belts 16,26 of the stop elements 15,25 advantageously are faced each other. Moreover each of them is faced to the surface of the corresponding supporting wall 61,62 of the first bracket 60. This arrangement assures a constant behavior of the belts 16,26 during the return phase of the hanging. Indeed it has to be noted that the two belts crinkle always in the same direction and more precisely outwards with respect to reference space comprised between the two brackets 60,70 of the device.

The present invention relates also to a vehicle comprising a chassis including a couple of side members 50. Such vehicle comprises at least a rebounded axle 3 and it is characterized in that it comprises a couple of stopping devices according to the invention, each of which for limiting the hanging of a corresponding end part of the axle 3.

## Claims

1. Stopping device (1) for limiting the hanging of a rebounded axle (3) on a vehicle, wherein said vehicle also comprises a chassis provided with a couple of side members (50), said stopping device (1) further comprising:
- at least a first stop element (5,15) including a first flexible belt, a first linking element (7', 17') and a second linking element (7", 17"), each of said linking elements (7', 7") being connected to a corresponding end of said belt (6);
- first connecting means configured for connecting stably said first linking element (7',17') to one of said member (50) of said vehicle;
- second connecting means configured for connecting stably said second first linking element (7", 17") to said rebounded axle (3) of said vehicle
, **characterized in that** it comprises a second stop element (25) including a second flexible belt (26), a first linking element (27') and a second linking element (27'') each of said linking elements (27', 27'') being connected to a corresponding end of said second belt (6) wherein said first connecting means are configured also for connecting stably said first linking element (27') of said second stop element (25) to said side member (50), and wherein said second connecting means are configured also for connecting stably said second linking element (27") of said second stop element (25) to said rebounded axle (3) wherein at least one of said linking elements (17', 17'', 27', 27") are connected to one of said member (50) or axle (3) by means for adjusting the length of the corresponding stop element (15, 25).

2. Stopping device (1) according to claim 1, **characterized in that** said first connecting means comprise a first bracket (60) and said second connecting means comprises a second bracket (70), and wherein said first linking element (7',17') of said first stop element (5,15) is connected to said first bracket (60) and said second linking element (7",17") of said first element (5,15) is connected to said second bracket (70).

3. Stopping device (1) according to claim 1, **characterized in that** said first connecting means comprise a first bracket (60) and said second connecting means comprises a second bracket (70), wherein said first linking element (17') of said first stop element (15) and said first linking element (27') of said second stop element (25) are connected to said first bracket (60) by means of first fixing means (32,33,63) and wherein said second linking element (17") of said first stop element (15) and said second linking element (27") of said second stop element (25) are connected to said second bracket (70) by means of said fixing means (34,49).

4. Stopping device (1) according to any of the claims 2 to 3, **characterized in that** said linking elements (17', 17", 27',27") of said stop elements (15,25) are connected to a corresponding of said brackets (60,70) so that the first belt (5) of the first stop element (15) and the second belt (26) of said second element (25) are faced each other.

5. Stopping device according to any of the claims 2 to 4, **characterized in that** said first bracket (60) includes a first supporting wall (61) and a second supporting wall (62) which are substantially parallel each other and mutually separated by a partition space (68), said first bracket (60) being configured to be fixed to said side member (50) so that the supporting walls (61,62) extends outwards according to a direction (130) substantially orthogonal to the development direction (150) of said side member (50).

6. Stopping device according to claim 5, **characterized in** said first fixing means are configured to fix said first linking element (17') of said first stop element (15) in a position adjacent to said first supporting wall (61) and to fix a first linking element (27') of said second stop element (25) in a position adjacent to said second supporting wall (62).

7. Stopping device according to claim 5 or 6, **characterized in that** said first bracket (60) also comprises a flat connecting wall (66) from which the supporting walls (61,62) protrudes orthogonally according to an U-shaped configuration, said connecting wall (66) being configured to be connected to a surface of the side member (50).

8. Stopping device according to claim 7, **characterized in that** said first bracket also comprised a bottom wall (69) arranged between said supporting walls (61,62) substantially at their lower edge, said first bracket (60) also comprising a buffer element (71) connected to said bottom wall (69) externally to said partition space (68).

9. Stopping device according to any one of the claims 2 -8, **characterized in that** said second bracket (70) comprises a connecting plate (51) configured to be connected directly or indirectly to said axle (3) in a position substantially below said first bracket (60), said second fixing means being configured to fix the second linking element (17'') of said first stop element (15) and the second linking element (27") of said second element (25) at opposite end portions (73,78) of said connecting plate (51), said portions (73,78) being opposite along a direction substantially parallel to the development direction of said side member (50).

10. Stopping device according to anyone of the claims 2 -9, **characterized in that** at least one of said linking elements (17', 17'',27') of at least one of said stop elements (15,25) comprises a body having three sides according to a triangular structure, a first side of said body being arranged in a loop (26', 26", 36') defined as a corresponding end of said first belt (16), said body further comprising a cylindrical component (19,29) arranged between said sides of said body and having a through hole (13,23) suitable to be crossed by a corresponding fixing element (32,33,34) arranged to fix said at least one linking element to a corresponding bracket (60,70).

11. Stopping device according to anyone of the claims 2 -9, **characterized in that** both the linking elements (17', 17") of said first stop element (15) comprises a body having three sides according to a triangular structure, a first side of said body being arranged in a loop (26',26'') defined as a corresponding end of said first belt (16), said body further comprising a cylindrical component (19) arranged between said sides of said body and having a through hole (13) suitable to be crossed by a corresponding fixing element (32,34) arranged to fix each linking element (17', 17'') to one of said brackets (60,70).

12. Stopping device according to anyone of the claims 2-11, **characterized in that** said first linking element (27') of said second stop element (25) comprises a body having three sides according to a triangular shape, a first side (28) of said body being arranged in a loop (36') defined at a corresponding first end of said second belt (26), said body further comprising a cylindrical component (29) arranged between said sides of said body and having a through hole (23) suitable to be crossed by a corresponding fixing element arranged to fix said first linking element (27') to said first bracket (60).

13. Stopping device according to claim 12, **characterized in that in that** said second linking element (27'') of said second stop element (25) comprises a square bend threaded U-bolt comprising a central side (48) from which two parallel wings (46) develop, said central side (48) being arranged in a loop (36'') defined at a corresponding second end of said second belt, said parallel wings (46) being arranged to be inserted in corresponding through holes defined on said second bracket (70) and being at least partially threaded to receive closing nuts (49) for fixing said second linking element (27") to said second bracket (70) in an adjustable manner.

14. Vehicle for the transportation of goods or passengers, especially along off-roads paths, **characterized in that** it comprises one or more stopping device for limiting the hanging of a rebounded axle according to anyone of the claims 1-13.

## Patentansprüche

1. Anschlagsvorrichtung (1) zur Begrenzung der Hängung einer aufgeprallten Achse (3) eines Fahrzeugs, welches Fahrzeug ferner ein Fahrgestell umfasst, welches mit einem Paar von Seitenelementen (50) versehen ist, welche Anschlagsvorrichtung (1) ferner umfasst:
- zumindest ein erstes Anschlagselement (5,15), umfassend einen ersten flexiblen Riemen, ein erstes Verbindungselement (7',17') und ein zweites Verbindungselement (7",17"), wobei jedes der Verbindungselemente (7',7") mit einem entsprechenden Ende des Riemens (6) verbunden ist;
- erste Verbindungsmittel, ausgebildet zur stabilen Verbindung des ersten Verbindungselements (7',17') mit einem der Elemente (50) des Fahrzeugs;
- zweite Verbindungsmittel, ausgebildet zur stabilen Verbindung des zweiten ersten Verbindungselements (7",17") zu der aufgeprallten Achse (3) des Fahrzeugs,
**dadurch gekennzeichnet, dass** sie ein zweites Anschlagselement (25) umfasst, umfassend einen zweiten flexiblen Riemen (26), ein erstes Verbindungselement (27') und ein zweites Verbindungselement (27"), wobei jedes der Verbindungselemente (27',27") mit einem entsprechenden Ende des zweiten Riemens (6) verbunden ist, wobei die ersten Verbindungsmittel ferner dazu ausgebildet sind, das erste Verbindungselement (27') des zweiten Anschlagselements (25) mit dem Seitenelement (50) stabil zu verbinden, und wobei die zweiten Verbindungsmittel ferner dazu ausgebildet sind, das zweite Verbindungselement (27") des zweiten Anschlagselements (25) mit der aufgeprallten Achse (3) stabil zu verbinden, wobei zumindest eines der Verbindungselemente (17',17",27',27") mit einem der Elemente (50) oder der Achse (3) durch Mittel zur Anpassung der Länge des entsprechenden Anschlagselements (15,25) verbunden ist.

2. Anschlagsvorrichtung (1) gemäß Anspruch 1, **dadurch gekennzeichnet, dass** die ersten Verbindungsmittel eine erste Halterung (60) umfassen und dass die zweiten Verbindungsmittel eine zweite Halterung (70) umfassen, wobei das erste Verbindungselement (7',17') des ersten Anschlagselements (5,15) mit der ersten Halterung (60) verbunden ist und das zweite Verbindungselement (7",17") des ersten Elements (5,15) mit der zweiten Halterung (70) verbunden ist.

3. Anschlagsvorrichtung (1) gemäß Anspruch 1, **dadurch gekennzeichnet, dass** die erste Verbindungsmittel eine erste Halterung (60) umfassen und dass die zweiten Verbindungsmittel eine zweite Halterung (70) umfassen, wobei das erste Verbindungselement (17') des ersten Anschlagselements (15) und das erste Verbindungselement (27') des zweiten Anschlagselements (25) mit der ersten Klammer (60) durch erste Befestigungsmittel (32,33,63) verbunden sind, und wobei das zweite Verbindungselement (17") des ersten Anschlagselement (15) und das zweite Verbindungselement (27") des zweiten Anschlagselements (25) mit der zweiten Halterung (70) durch die Befestigungsmittel (34,49) verbunden sind.

4. Anschlagsvorrichtung (1) gemäß einem der Ansprüche 2 bis 3, **dadurch gekennzeichnet, dass** die Verbindungselemente (17',17",27',27") der Anschlagselemente (15,25) mit jeweils entsprechenden Halterungen (60,70) derart verbunden sind, dass der erste Riemen (5) des ersten Anschlagselements (15) und der zweite Riemen (26) des zweiten Elements (25) einander zugewandt sind.

5. Anschlagsvorrichtung gemäß einem der Ansprüche 2 bis 4, **dadurch gekennzeichnet, dass** die erste Halterung (60) eine erste Stützwand (61) und eine zweite Stützwand (62) umfasst, welche im wesentlichen parallel zueinander stehen und voneinander durch einen Zwischenraum (68) getrennt sind, wobei die erste Halterung (60) dazu ausgebildet sind, an dem Seitenelement (50) derart befestigt zu werden, dass die Stützwände (61,62) sich nach außen in einer Richtung (130) im wesentlichen senkrecht zu der Erstreckungsrichtung (150) des Seitenelements (50) zu erstrecken.

6. Anschlagsvorrichtung gemäß Anspruch 5, **dadurch gekennzeichnet, dass** die ersten Befestigungsmittel dazu ausgebildet sind, das erste Verbindungselement (17') des ersten Anschlagselements (15) in einer Position benachbart zu der ersten Stützwand (61) zu befestigen und ein erstes Verbindungselement (27') des zweiten Anschlagselements (25) in einer Position benachbart zu der zweiten Stützwand (62) zu befestigen.

7. Anschlagsvorrichtung gemäß Anspruch 5 oder 6, **dadurch gekennzeichnet, dass** die erste Halterung (60) ferner eine flache Anschlusswand (66) umfasst, von welcher die Stützwände (61,62) sich senkrecht entsprechend einer U-förmigen Anordnung erstrecken, welche Anschlusswand (66) dazu ausgebildet ist, mit einer Oberfläche des Seitenelements (50) verbunden zu werden.

8. Anschlagsvorrichtung gemäß Anspruch 7, **dadurch gekennzeichnet, dass** die erste Halterung ferner eine Bodenwand (69) umfasst, die zwischen den Stützwänden (61,62) im wesentlichen an deren unterer Kante angeordnet ist, wobei die erste Halterung (60) ferner ein Pufferelement (71) umfasst, das mit der Bodenwand (69) nach außen zum Zwischenraum (68) hin verbunden ist.

9. Anschlagsvorrichtung gemäß einem der Ansprüche 2 bis 8, **dadurch gekennzeichnet, dass** die zweite Halterung (70) eine Verbindungsplatte (51) umfasst, die dazu ausgebildet ist, direkt oder indirekt mit der Achse (3) in einer Position im wesentlichen unterhalb der ersten Halterung (60) verbunden zu werden, wobei die zweiten Befestigungsmittel dazu ausgebildet sind, das zweite Verbindungselement (17") des ersten Anschlagselements (15) und das zweite Verbindungselement (27") des zweiten Elements (25) an gegenüberliegenden Endbereichen (73,78) der Verbindungsplatte (51) zu befestigen, welche Bereiche (73,78) sich in einer Richtung im wesentlichen parallel zu der Erstreckungsrichtung des Seitenelements (50) gegenüberliegen.

10. Anschlagsvorrichtung gemäß einem der Ansprüche 2 bis 9, **dadurch gekennzeichnet, dass** zumindest eines der Verbindungselemente (17',17",27',27") von zumindest einem der Anschlagselemente (15,25) einen Körper mit drei Seiten entsprechend einer Dreiecksstruktur umfasst, wobei eine erste Seite dieses Körpers in einer Schlaufe (26',26",36') angeordnet ist, die als ein entsprechendes Ende des ersten Riemens (16) definiert ist, und der Körper ferner ein zylindrisches Bauteil (19,29) umfasst, das zwischen den Seiten des Körpers angeordnet ist und ein Durchgangsloch (13,23) umfasst, dazu geeignet, um von einem entsprechenden Befestigungselement (32,33,34) durchkreuzt zu werden, das dazu angeordnet ist, das zumindest eine Verbindungselement an einer entsprechenden Halterung (60,70) zu befestigen.

11. Anschlagsvorrichtung gemäß einem der Ansprüche 2 bis 9, **dadurch gekennzeichnet, dass** beide Verbindungselemente (17',17") des ersten Anschlagselements (15) einen Körper mit drei Seiten entsprechend einer Dreiecksstruktur umfassen, wobei eine erste Seite des Körpers in einer Schlaufe (26',26") angeordnet ist, die als ein entsprechendes Ende des ersten Riemens (16) definiert ist, welcher Körper ferner ein zylindrisches Bauteil (19) umfasst, das zwischen den Seiten des Körpers angeordnet ist und ein Durchgangsloch (13) aufweist, dazu geeignet, von einem entsprechenden Befestigungselement (32,34) durchkreuzt zu werden, welches dazu angeordnet ist, jedes Verbindungselement (17',17") an einer der Halterungen (60,70) zu befestigen.

12. Anschlagsvorrichtung gemäß einem der Ansprüche 2 bis 11, **dadurch gekennzeichnet, dass** das erste Verbindungselement (27') des zweiten Anschlagselements (25) einen Körper mit drei Seiten entsprechend einer Dreiecksform umfasst, wobei eine erste Seite (28) dieses Körpers in einer Schlaufe (36') angeordnet ist, die an einem entsprechenden ersten Ende des zweiten Riemens (26) definiert ist, und der Körper ferner ein zylindrisches Bauteil (29) umfasst, das zwischen den Seiten des Körpers angeordnet ist und ein Durchgangsloch (23) aufweist, dazu geeignet, von einem entsprechenden Befestigungselement durchkreuzt zu werden, welches dazu angeordnet ist, das erste Verbindungselement (27') an der ersten Halterung (60) zu befestigen.

13. Anschlagsvorrichtung entsprechend Anspruch 12, **dadurch gekennzeichnet, dass** das zweite Verbindungselement (27") des zweiten Anschlagselements (25) einen quadratisch abgewinkelten U-förmigen Gewindebolzen umfasst, mit einer zentralen Seite (48), von welcher aus sich parallele Schenkel (46) erstrecken, wobei die zentrale Seite (48) in einer Schlaufe (36 ") angeordnet ist, die an einem entsprechenden zweiten Ende des zweiten Riemens definiert ist, wobei die parallelen Schenkel (46) dazu angeordnet sind, in entsprechende Durchgangslöcher in der zweiten Halterung (70) gesetzt zu werden, und welche zumindest teilweise mit Gewinden versehen sind, zur Aufnahme von Verschlussmuttern (49) zur Befestigung des zweiten Verbindungselements (27") an der zweiten Halterung (70) in einstellbarer Weise.

14. Fahrzeug zum Transport von Gütern oder Fahrgästen, insbesondere entlang Geländewegen, **dadurch gekennzeichnet, dass** es eine oder mehrere Anschlagsvorrichtungen zur Begrenzung der Hängung einer aufgeprallten Achse gemäß einem der Ansprüche 1 bis 13 umfasst.

## Revendications

1. Dispositif à fonction d'arrêt (1) pour limiter la suspension d'un essieu en détente (3) sur un véhicule, dans lequel ledit véhicule comprend également un châssis qui est muni d'un couple d'éléments latéraux (50), ledit dispositif à fonction d'arrêt (1) comprenant en outre :
- au moins un premier élément d'arrêt (5, 15) qui inclut une première courroie flexible, un premier élément de liaison (7', 17') et un second élément de liaison (7", 17"), chacun desdits éléments de liaison (7', 7") étant connecté à une extrémité correspondante de ladite courroie (6) ;
- un premier moyen de connexion qui est configuré pour connecter de façon stable ledit premier élément de liaison (7', 17') à un dit élément latéral (50) dudit véhicule ;
- un second moyen de connexion qui est configuré pour connecter de façon stable ledit second élément de liaison (7", 17") audit essieu en détente (3) dudit véhicule ;
**caractérisé en ce qu'**il comprend un second élément d'arrêt (25) qui inclut une seconde courroie flexible (26), un premier élément de liaison (27') et un second élément de liaison (27"), chacun desdits éléments de liaison (27', 27") étant connecté à une extrémité correspondante de ladite seconde courroie (26), dans lequel ledit premier moyen de connexion est configuré également pour connecter de façon stable ledit premier élément de liaison (27') dudit second élément d'arrêt (25) audit élément latéral (50), et dans lequel ledit second moyen de connexion est configuré également pour connecter de façon stable ledit second élément de liaison (27') dudit second élément d'arrêt (25) audit essieu en détente (3), dans lequel au moins l'un desdits éléments de liaison (17', 17", 27', 27") est connecté à un dit élément latéral (50) ou audit essieu (3) par un moyen pour régler la longueur de l'élément d'arrêt correspondant (15, 25).

2. Dispositif à fonction d'arrêt (1) selon la revendication 1, **caractérisé en ce que** ledit premier moyen de connexion comprend une première console (60) et ledit second moyen de connexion comprend une seconde console (70), et dans lequel ledit premier élément de liaison (7', 17') dudit premier élément d'arrêt (5, 15) est connecté à ladite première console (60) et ledit second élément de liaison (7", 17") dudit premier élément d'arrêt (5, 15) est connecté à ladite seconde console (70).

3. Dispositif à fonction d'arrêt (1) selon la revendication 1, **caractérisé en ce que** ledit premier moyen de connexion comprend une première console (60) et ledit second moyen de connexion comprend une seconde console (70), dans lequel ledit premier élément de liaison (17') dudit premier élément d'arrêt (15) et ledit premier élément de liaison (27') dudit second élément d'arrêt (25) sont connectés à ladite première console (60) par un premier moyen de fixation (32, 33, 63) et dans lequel ledit second élément de liaison (17") dudit premier élément d'arrêt (15) et ledit second élément de liaison (27") dudit second élément d'arrêt (25) sont connectés à ladite seconde console (70) par ledit moyen de fixation (34, 49).

4. Dispositif à fonction d'arrêt (1) selon l'une quelconque des revendications 2 et 3, **caractérisé en ce que** lesdits éléments de liaison (17', 17", 27', 27") desdits éléments d'arrêt (15, 25) sont connectés à l'une correspondante desdites consoles (60, 70) de telle sorte que la première courroie (5) du premier élément d'arrêt (15) et la seconde courroie (26) dudit second élément d'arrêt (25) se fassent face l'une l'autre.

5. Dispositif à fonction d'arrêt selon l'une quelconque des revendications 2 à 4, **caractérisé en ce que** ladite première console (60) inclut une première paroi de support (61) et une seconde paroi de support (62) qui sont sensiblement parallèles l'une à l'autre et qui sont séparées de façon mutuelle par un espace de séparation (68), ladite première console (60) étant configurée de manière à ce qu'elle soit fixée audit élément latéral (50) de telle sorte que les parois de support (61, 62) s'étendent vers l'extérieur conformément à une direction (130) qui est sensiblement perpendiculaire à la direction de développement (150) dudit élément latéral (50).

6. Dispositif à fonction d'arrêt selon la revendication 5, **caractérisé en ce que** ledit premier moyen de fixation est configuré de manière à ce qu'il fixe ledit premier élément de liaison (17') dudit premier élément d'arrêt (15) en une position qui est adjacente à ladite première paroi de support (61) et de manière à ce qu'il fixe un premier élément de liaison (27') dudit second élément d'arrêt (25) en une position qui est adjacente à ladite seconde paroi de support (62).

7. Dispositif à fonction d'arrêt selon la revendication 5 ou 6, **caractérisé en ce que** ladite première console (60) comprend également une paroi de connexion plane (66) depuis laquelle les parois de support (61, 62) font saillie perpendiculairement conformément à une configuration en forme de U, ladite paroi de connexion (66) étant configurée de manière à ce qu'elle soit connectée à une surface de l'élément latéral (50).

8. Dispositif à fonction d'arrêt selon la revendication 7, **caractérisé en ce que** ladite première console comprend également une paroi de fond (69) qui est agencée entre lesdites parois de support (61, 62) sensiblement au niveau de leurs bords inférieurs, ladite première console (60) comprenant également un élément de tampon (71) qui est connecté à ladite paroi de fond (69) de façon externe par rapport audit espace de séparation (68).

9. Dispositif à fonction d'arrêt selon l'une quelconque des revendications 2 à 8, **caractérisé en ce que** ladite seconde console (70) comprend une plaque de connexion (51) qui est configurée de manière à ce qu'elle soit connectée directement ou indirectement audit essieu (3) en une position qui est sensiblement au-dessous de ladite première console (60), ledit second moyen de fixation étant configuré de manière à ce qu'il fixe le second élément de liaison (17") dudit premier élément d'arrêt (15) et le second élément de liaison (27") dudit second élément d'arrêt (25) en des parties d'extrémité opposées (73, 78) de ladite plaque de connexion (51), lesdites parties (73, 78) étant opposées suivant une direction qui est sensiblement parallèle à la direction de développement dudit élément latéral (50).

10. Dispositif à fonction d'arrêt selon l'une quelconque des revendications 2 à 9, **caractérisé en ce qu'**au moins l'un desdits éléments de liaison (17', 17", 27') d'au moins l'un desdits éléments d'arrêt (15, 25) comprend un corps qui comporte trois côtés conformément à une structure triangulaire, un premier côté dudit corps étant agencé dans une boucle (26', 26", 36') qui est définie en tant qu'extrémité correspondante de ladite première courroie (16), ledit corps comprenant en outre un composant cylindrique (19, 29) qui est agencé entre lesdits côtés dudit corps et qui comporte un trou traversant (13, 23) qui est adapté de manière à ce qu'il soit croisé par un élément de fixation correspondant (32, 33, 34) qui est agencé de manière à ce qu'il fixe ledit au moins un élément de liaison à une console correspondante (60, 70).

11. Dispositif à fonction d'arrêt selon l'une quelconque des revendications 2 à 9, **caractérisé en ce que** les éléments de liaison (17', 17") dudit premier élément d'arrêt (15) comprennent tous deux un corps qui comporte trois côtés conformément à une structure triangulaire, un premier côté dudit corps étant agencé dans une boucle (26', 26") qui est définie en tant qu'extrémité correspondante de ladite première courroie (16), ledit corps comprenant en outre un composant cylindrique (19) qui est agencé entre lesdits côtés dudit corps et qui comporte un trou traversant (13) qui est adapté de manière à ce qu'il soit croisé par un élément de fixation correspondant (32, 34) qui est agencé de manière à ce qu'il fixe chaque élément de liaison (17', 17") à l'une desdites consoles (60, 70).

12. Dispositif à fonction d'arrêt selon l'une quelconque des revendications 2 à 11, **caractérisé en ce que** ledit premier élément de liaison (27') dudit second élément d'arrêt (25) comprend un corps qui comporte trois côtés conformément à une forme triangulaire, un premier côté (28) dudit corps étant agencé dans une boucle (36') qui est définie en une première extrémité correspondante de ladite seconde courroie (26), ledit corps comprenant en outre un composant cylindrique (29) qui est agencé entre lesdits côtés dudit corps et qui comporte un trou traversant (23) qui est adapté de manière à ce qu'il soit croisé par un élément de fixation correspondant qui est agencé de manière à ce qu'il fixe ledit premier élément de liaison (27') à ladite première console (60).

13. Dispositif à fonction d'arrêt selon la revendication 12, **caractérisé en ce que** ledit second élément de liaison (27") dudit second élément d'arrêt (25) comprend un boulon en forme de U taraudé plié carré qui comprend un côté central (48) depuis lequel deux ailes parallèles (46) sont développées, ledit côté central (48) étant agencé dans une boucle (36") qui est définie en une seconde extrémité correspondante de ladite seconde courroie, lesdites ailes parallèles (46) étant agencées de manière à ce qu'elles soient insérées dans des trous traversants correspondants qui sont définis sur ladite seconde console (70) et étant au moins partiellement filetées pour recevoir des écrous de fermeture (49) pour fixer ledit second élément de liaison (27") à ladite seconde console (70) d'une façon réglable.

14. Véhicule pour le transport de marchandises ou de passagers, particulièrement le long de voies hors routes, **caractérisé en ce qu'**il comprend un ou plusieurs dispositif(s) à fonction d'arrêt pour limiter la suspension d'un essieu en détente selon l'une quelconque des revendications 1 à 13.
